# EUROPEAN PATENT APPLICATION

(11) **EP 4 572 437 A1**
(43) Date of publication of application: **18.06.2025**
(21) Application number: 23869964.9
(22) Date of filing: 31.07.2023
(51) Int. Cl.: H04W 56/00

(54) **DATA PROCESSING METHOD AND RELATED APPARATUS**

(30) Priority: 28.09.2022 CN 202211196905
(71) Applicant: Huawei Technologies Co., Ltd., Shenzhen, Guangdong 518129 (CN)
(72) Inventor: ZHOU, Han, Shenzhen, Guangdong 518129 (CN); TIE, Xiaolei, Shenzhen, Guangdong 518129 (CN); HUANG, Wenwen, Shenzhen, Guangdong 518129 (CN); HUA, Meng, Shenzhen, Guangdong 518129 (CN)
(74) Representative: Grünecker Patent- und Rechtsanwälte PartG mbB
(86) International application number: PCT/CN2023/110120
(87) International publication number: WO 2024/066718

(57) **Abstract**

This application discloses a data processing method and a related apparatus, and is applied to the communication field. The method includes: A main functional module of a terminal device obtains a signal processing pattern. The signal processing pattern indicates first time in which a secondary functional module with low power consumption in the terminal device can process a target signal, or indicates second time in which the secondary functional module cannot process the target signal. After the signal processing pattern is obtained, the secondary functional module processes the target signal based on the signal processing pattern, in other words, the secondary functional module processes the target signal only in the first time. Therefore, during transmission of the target signal, transmission time of an important signal and an important channel in a communication system can be avoided, to ensure stable running of the communication system.

## Description

This application claims priority to Chinese Patent Application No. 202211196905.1, filed with the China National Intellectual Property Administration on September 28, 2022 and entitled "DATA PROCESSING METHOD AND RELATED APPARATUS", which is incorporated herein by reference in its entirety.

### TECHNICAL FIELD

This application relates to the communication field, and in particular, to a data processing method and a related apparatus.

### BACKGROUND

With development of technologies, a 5th generation mobile communication technology (5th Generation Mobile Communication Technology, 5G) is gradually popularized. A 5G network (also referred to as new radio (New Radio, NR)) supports a larger transmission bandwidth, more transceiver antenna arrays, a higher transmission rate, and a more flexible smaller-granularity scheduling mechanism. However, this greatly increases a power consumption burden of a terminal device (User Equipment, UE).

To reduce power consumption of the UE, the 3rd Generation Partnership Project (3rd Generation Partnership Project, 3GPP) introduces a research topic of power consumption reduction in the NR Rel-16/17 standard version. A currently proposed method is to apply a secondary functional module with low power consumption to the 5G network. Specifically, when a wake-up signal (Wake-up Signal, WUS) is listened to, only the secondary functional module is enabled, so that a main functional module is in a deep sleep or power-off state. After receiving the WUS, the secondary functional module wakes up or enables the corresponding main functional module. Simple modulation and coding, for example, binary on-off keying (On-Off Keying, OOK) or frequency-shift keying (Frequency-shift keying, FSK) is generally used for the WUS. Demodulation and decoding operations are simple. Therefore, the secondary functional module can receive a wake-up packet by using a simple receiving module. However, a conventional main functional module generally needs to include both a radio frequency module and a baseband processing module. Therefore, operating power consumption of the secondary functional module is far lower than that of the main functional module.

To deploy the wake-up signal received by the secondary functional module in an NR system, an air interface time-frequency resource needs to be used in both the conventional NR system and the WUS. Data transmission may be performed in a manner of frequency division multiplexing (frequency-division multiplexing, FDM) and time division multiplexing (time-division multiplexing, TDM). However, to improve receiving performance of the secondary functional module, a transmission rate of the WUS is generally low. Consequently, the WUS occupies a time-frequency resource for long time. As a result, a signal in the NR system cannot be normally transmitted, and normal running of the NR system is affected.

### SUMMARY

This application provides a data processing method and a related apparatus, to enable a secondary functional module of a terminal device to process a target signal in specified time, so as to ensure normal running of a communication system.

A first aspect of this application provides a data processing method. The method includes: A terminal device obtains a signal processing pattern by using a main functional module. The signal processing pattern indicates first time in which a secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol. The terminal device processes the target signal based on the signal processing pattern by using the secondary functional module.

The time granularities of the first time and the second time may be the same or different. For example, if the time granularity of the first time is a frame, the time granularity of the second time may be a frame, or may be a subframe or a slot. A value relationship between the time granularity of the first time and the time granularity of the second time is not limited. At a same time granularity, the terminal device may obtain the second time based on the first time, or may obtain the first time based on the second time. For example, in a case of seven slots, if the first time is the first three slots, the terminal device may obtain that the last four slots are the second time.

The terminal device processes the target signal based on the signal processing pattern by using the secondary functional module. To be specific, the terminal device processes the target signal in the first time indicated by the signal processing pattern by using the secondary functional module, and does not process the target signal in the second time indicated by the signal processing pattern. That the terminal device processes the target signal in the first time by using the secondary functional module and does not process the target signal in the second time may be that the terminal device receives the target signal in the first time by using the secondary functional module, and does not receive the target signal in the second time. Alternatively, the terminal device may perform at least one of operations of measurement, channel estimation, demodulation, and decoding on the target signal in the first time by using the secondary functional module, and does not perform these operations on the target signal in the second time. In addition, the terminal device may perform an operation on the target signal in the first time by using the secondary functional module, for example, perform a differential operation, an addition operation, or a multiplication operation on the target signal, and perform no operation processing on the target signal in the second time. A specific form in which the terminal device processes the target signal by using the secondary functional module is not limited in this application.

In the first aspect of this application, the secondary functional module of the terminal device processes the target signal in the first time based on the signal processing pattern, and does not process the target signal in the second time. Therefore, the target signal does not occupy a channel for long time during transmission. For important signals such as control signaling and a reference signal in a communication system, transmission time of these signals may be set to the second time, so that no conflict with these signals is caused during transmission of the target signal, to ensure stable running of the communication system.

In a possible implementation of the first aspect, the step in which the terminal device obtains the signal processing pattern includes: The terminal device receives indication information sent by a network device. The indication information includes the signal processing pattern.

A manner in which the terminal device obtains the signal processing pattern may be that the network device generates the signal processing pattern, and then sends the signal processing pattern to the terminal device. The network device may send the signal processing pattern to the terminal device by sending the indication information to the terminal device, where the indication information carries the signal processing pattern. In this possible implementation, the signal processing pattern is limited to being generated by the network device, to improve implementability of the solution.

In a possible implementation of the first aspect, the step in which the terminal device obtains the signal processing pattern includes: The terminal device receives indication information sent by a network device. The indication information includes cell-specific configuration information or terminal device-specific configuration information. The terminal device generates the signal processing pattern based on the indication information.

The cell-specific configuration information is cell-level information configured by the network device for a managed cell, and the terminal device-specific configuration information is dedicated information configured by the network device for a terminal device in the cell. In this possible implementation, the terminal device generates the signal processing pattern based on the cell-specific configuration information or the terminal device-specific configuration information that is sent by the network device, to extend an application scenario of the solution. In addition, the network device does not need to send the signal processing pattern to the terminal device, to reduce signaling overheads.

In a possible implementation of the first aspect, the signal processing pattern further indicates third time in which the secondary functional module processes the target signal, a time granularity of the third time is one of a frame, a subframe, a slot, and a symbol, and the first time and the third time use different time granularities. In this possible implementation, the signal processing pattern may include information about a plurality of time granularity levels. For example, if the first time is a specific slot, it indicates that the slot may be used to process the target signal. However, in some cases, not all symbols in the slot can be used to process the target signal. For example, if the first two symbols in the slot need to be used to transmit control signaling, symbol-level indication information is further required to indicate a symbol level situation in the slot. In this case, the signal processing pattern may further include the third time, and the third time indicates the last 12 symbols. In this possible implementation, the signal processing pattern includes the information about the plurality of time granularity levels, so that flexibility of the solution can be improved, and information indicated by the signal processing pattern can be more specific.

In a possible implementation of the first aspect, the signal processing pattern further indicates fourth time in which the secondary functional module determines not to process the target signal, a time granularity of the fourth time is one of a frame, a subframe, a slot, and a symbol, and the second time and the fourth time use different time granularities. In this possible implementation, the signal processing pattern may include information about a plurality of time granularity levels, so that flexibility of the solution can be improved, and information indicated by the signal processing pattern can be more specific.

In a possible implementation of the first aspect, the target signal includes a first synchronization signal, where the first synchronization signal indicates the terminal device to perform time synchronization with the network device.

When receiving the target signal, the secondary functional module of the terminal device may not achieve time synchronization with the network device. In other words, the terminal device may not know a frame, a subframe, a slot, or a symbol in which the currently received signal is located. Therefore, even if the terminal device obtains the signal processing pattern, the terminal device cannot process the target signal based on the signal processing pattern. The terminal device can implement time synchronization with the network device by using the first synchronization signal, so that the terminal device can subsequently process the target signal based on the signal processing pattern. It should be noted that the target signal includes the first synchronization signal. To be specific, when processing the target signal based on the signal processing pattern, the terminal device also processes the first synchronization signal.

In a possible implementation of the first aspect, the target signal further includes a wake-up signal, and the wake-up signal is used to wake up the main functional module to operate.

In this possible implementation, the target signal includes the wake-up signal. To reduce power consumption of the terminal device, before the wake-up signal is received, the main functional module is in a sleep or power-off state, and the secondary functional module listens to the wake-up signal. For example, in the sleep state, the main functional module may turn off modules such as a receiving antenna, an amplifier, and a filter of a radio frequency unit, and turn on only a crystal oscillator to maintain a clock, so that the main functional module can be started quickly subsequently. The power-off state is that the main functional module is powered off, to be specific, all modules included in the main functional module are turned off. After detecting the wake-up signal, the secondary functional module determines, based on the signal processing pattern, time in which the wake-up signal can be processed. The processed wake-up signal is used to wake up the main functional module. In this possible implementation, the target signal is limited to including the wake-up signal, to improve implementability of the solution.

In a possible implementation of the first aspect, before the step in which the terminal device processes the wake-up signal by using the secondary functional module, the method further includes: The terminal device receives a second synchronization signal by using the secondary functional module, where the second synchronization signal is used by the terminal device to perform time synchronization with the network device. The second synchronization signal is not a target signal, and the terminal device does not process the second synchronization signal based on the signal processing pattern. Therefore, the second synchronization signal may be continuously sent in terms of time. In this possible implementation, the terminal device may further perform time synchronization with the network device by using the second synchronization signal, and the second synchronization signal may be continuously sent. Therefore, the terminal device can more easily implement time synchronization with the network device by using the second synchronization signal.

A second aspect of this application provides a data processing method. The method includes: A network device generates indication information. The network device sends the indication information to a terminal device. The terminal device includes a main functional module and a secondary functional module, the indication information indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol.

The time granularities of the first time and the second time may be the same or different. For example, if the time granularity of the first time is a frame, the time granularity of the second time may be a frame, or may be a subframe or a slot. A value relationship between the time granularity of the first time and the time granularity of the second time is not limited. At a same time granularity, the terminal device may obtain the second time based on the first time, or may obtain the first time based on the second time. For example, in a case of seven slots, if the first time is the first three slots, the terminal device may obtain that the last four slots are the second time.

That the secondary functional module processes the target signal in the first time or does not process the target signal in the second time may be that the secondary functional module receives the target signal in the first time and does not receive the target signal in the second time. Alternatively, the secondary functional module may perform at least one of operations of measurement, channel estimation, demodulation, and decoding on the target signal in the first time, and does not perform these operations on the target signal in the second time. In addition, the terminal device may perform an operation on the target signal in the first time by using the secondary functional module, for example, perform a differential operation, an addition operation, or a multiplication operation on the target signal, and perform no operation processing on the target signal in the second time. A specific form in which the terminal device processes the target signal by using the secondary functional module is not limited in this application.

In the second aspect of this application, the indication information indicates the terminal device to use the secondary functional module to process the target signal in the first time, and not to process the target signal in the second time. Therefore, the target signal does not occupy a channel for long time during transmission. For important signals such as control signaling and a reference signal in a communication system, transmission time of these signals may be set to the second time, so that no conflict with these signals is caused during transmission of the target signal, and the target signal can better coexist with the communication system, to ensure stable running of the communication system.

In a possible implementation of the second aspect, the indication information includes a signal processing pattern generated by the network device based on cell-specific configuration information or terminal device-specific configuration information. In other words, the signal processing pattern is generated by the network device based on the cell-specific configuration information or the terminal device-specific configuration information, and then sent to the terminal device. The cell-specific configuration information is cell-level information configured by the network device for a managed cell, and the terminal device-specific configuration information is dedicated information configured by the network device for a terminal device in the cell. In this possible implementation, the signal processing pattern is limited to being generated by the network device, to improve implementability of the solution.

In a possible implementation of the second aspect, the indication information includes cell-specific configuration information or terminal device-specific configuration information. In this possible implementation, a signal processing pattern is generated by the terminal device based on the cell-specific configuration information or the terminal device-specific configuration information that is sent by the network device, to extend an application scenario of the solution. In addition, the network device does not need to send the signal processing pattern to the terminal device, to reduce signaling overheads.

In a possible implementation of the second aspect, the indication information further indicates third time in which the secondary functional module processes the target signal, a time granularity of the third time is one of a frame, a subframe, a slot, and a symbol, and the first time and the third time use different time granularities. In this possible implementation, the signal processing pattern may include information about a plurality of time granularity levels. For example, if the first time is a specific slot, it indicates that the slot may be used to process the target signal. However, in some cases, not all symbols in the slot can be used to process the target signal. For example, if the first two symbols in the slot need to be used to transmit uplink signaling, symbol-level indication information is further required to indicate a symbol level situation in the slot. In this case, the signal processing pattern may further include the third time, and the third time indicates the last 12 symbols. In this possible implementation, the signal processing pattern includes the information about the plurality of time granularity levels, so that flexibility of the solution can be improved, and information indicated by the signal processing pattern can be more specific.

In a possible implementation of the second aspect, the indication information further indicates fourth time in which the secondary functional module determines not to process the target signal, a time granularity of the fourth time is one of a frame, a subframe, a slot, and a symbol, and the second time and the fourth time use different time granularities. In this possible implementation, the signal processing pattern may include information about a plurality of time granularity levels, so that flexibility of the solution can be improved, and information indicated by the signal processing pattern can be more specific.

In a possible implementation of the second aspect, the target signal includes a first synchronization signal, where the first synchronization signal indicates the terminal device to perform time synchronization with the network device.

When receiving the target signal, the secondary functional module of the terminal device may not achieve time synchronization with the network device. In other words, the terminal device may not know a frame, a subframe, a slot, or a symbol in which the currently received signal is located. Therefore, even if the terminal device obtains the signal processing pattern, the terminal device cannot process the target signal based on the signal processing pattern. The terminal device can implement time synchronization with the network device by using the first synchronization signal, so that the terminal device can subsequently process the target signal based on the signal processing pattern. It should be noted that the target signal includes the first synchronization signal. To be specific, when processing the target signal based on the signal processing pattern, the terminal device also processes the first synchronization signal.

In a possible implementation of the second aspect, the target signal further includes a wake-up signal, and the wake-up signal is used to wake up the main functional module to operate.

In this possible implementation, the target signal includes the wake-up signal. To reduce power consumption of the terminal device, before the wake-up signal is received, the main functional module is in a sleep or power-off state, and the secondary functional module listens to the wake-up signal. For example, in the sleep state, the main functional module may turn off modules such as a receiving antenna, an amplifier, and a filter of a radio frequency unit, and turn on only a crystal oscillator to maintain a clock, so that the main functional module can be started quickly subsequently. The power-off state is that the main functional module is powered off, to be specific, all modules included in the main functional module are turned off. After detecting the wake-up signal, the secondary functional module determines, based on the signal processing pattern, time in which the wake-up signal can be processed. The processed wake-up signal is used to wake up the main functional module. In this possible implementation, the target signal is limited to including the wake-up signal, to improve implementability of the solution.

In a possible implementation of the second aspect, the method further includes: The network device sends a second synchronization signal to the terminal device, where the second synchronization signal indicates the terminal device to perform time synchronization with the network device. The second synchronization signal is not a target signal, and the terminal device does not process the second synchronization signal based on the signal processing pattern. Therefore, the second synchronization signal may be continuously sent in terms of time. In this possible implementation, the terminal device may further perform time synchronization with the network device by using the second synchronization signal, and the second synchronization signal may be continuously sent. Therefore, the terminal device can more easily implement time synchronization with the network device by using the second synchronization signal.

A third aspect of this application provides a communication apparatus. The communication apparatus includes a main functional module and a secondary functional module. The main functional module is configured to obtain a signal processing pattern. The signal processing pattern indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol. The secondary functional module is configured to process the target signal based on the signal processing pattern.

In a possible implementation of the third aspect, the main functional module is specifically configured to receive indication information sent by a network device. The indication information includes the signal processing pattern.

In a possible implementation of the third aspect, the main functional module is specifically configured to: receive indication information sent by a network device, where the indication information includes cell-specific configuration information or terminal device-specific configuration information; and generate the signal processing pattern based on the indication information.

In a possible implementation of the third aspect, the signal processing pattern further indicates third time in which the secondary functional module processes the target signal, a time granularity of the third time is one of a frame, a subframe, a slot, and a symbol, and the first time and the third time use different time granularities.

In a possible implementation of the third aspect, the signal processing pattern further indicates fourth time in which the secondary functional module determines not to process the target signal, a time granularity of the fourth time is one of a frame, a subframe, a slot, and a symbol, and the second time and the fourth time use different time granularities.

In a possible implementation of the third aspect, the target signal includes a first synchronization signal, where the first synchronization signal is used by a terminal device to perform time synchronization with the network device.

In a possible implementation of the third aspect, the target signal further includes a wake-up signal, and the wake-up signal is used to wake up the main functional module to operate.

In a possible implementation of the third aspect, the secondary functional module is further configured to receive a second synchronization signal, where the second synchronization signal is used by the terminal device to perform time synchronization with the network device.

The communication apparatus provided in the third aspect of this application is configured to perform the method according to any one of the first aspect or the possible implementations of the first aspect.

A fourth aspect of this application provides a communication apparatus, including a generation unit and a sending unit. The generation unit is configured to generate indication information. The sending unit is configured to send the indication information to a terminal device. The terminal device includes a main functional module and a secondary functional module, the indication information indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol.

In a possible implementation of the fourth aspect, the indication information includes a signal processing pattern generated by a network device based on cell-specific configuration information or terminal device-specific configuration information.

In a possible implementation of the fourth aspect, the indication information includes cell-specific configuration information or terminal device-specific configuration information.

In a possible implementation of the fourth aspect, the indication information further indicates third time in which the secondary functional module processes the target signal, a time granularity of the third time is one of a frame, a subframe, a slot, and a symbol, and the first time and the third time use different time granularities.

In a possible implementation of the fourth aspect, the indication information further indicates fourth time in which the secondary functional module determines not to process the target signal, a time granularity of the fourth time is one of a frame, a subframe, a slot, and a symbol, and the second time and the fourth time use different time granularities.

In a possible implementation of the fourth aspect, the target signal includes a first synchronization signal, where the first synchronization signal is used by the terminal device to perform time synchronization with the network device.

In a possible implementation of the fourth aspect, the target signal further includes a wake-up signal, and the wake-up signal is used to wake up the main functional module to operate.

In a possible implementation of the fourth aspect, the sending unit is further configured to send a second synchronization signal to the terminal device, where the second synchronization signal is used by the terminal device to perform time synchronization with the network device.

The communication apparatus provided in the fourth aspect of this application is configured to perform the method according to any one of the second aspect or the possible implementations of the second aspect.

A fifth aspect of this application provides a communication apparatus. The communication apparatus includes a main functional module and a secondary functional module. The main functional module and the secondary functional module share a processor and a memory, the memory is configured to store instructions, and the processor is configured to execute the instructions stored in the memory, to implement the method according to any one of claims 1 to 8, and to perform the method according to any one of the first aspect or the possible implementations of the first aspect.

A sixth aspect of this application provides a communication apparatus, including a processor and a memory. The memory is configured to store instructions. The processor is configured to obtain the instructions stored in the memory, to perform the method according to any one of the second aspect or the possible implementations of the second aspect.

A seventh aspect of this application provides a computer-readable storage medium. The computer-readable storage medium includes instructions, and when the instructions are run on a computer, the computer is enabled to perform the method according to any one of the first aspect or the possible implementations of the first aspect, or the computer is enabled to perform the method according to any one of the second aspect or the possible implementations of the second aspect.

An eighth aspect of this application provides a computer program product including instructions. When the computer program product runs on a computer, the computer is enabled to perform the method according to any one of the first aspect or the possible implementations of the first aspect, or the computer is enabled to perform the method according to any one of the second aspect or the possible implementations of the second aspect.

A ninth aspect of this application provides a chip system. The chip system includes at least one processor and a communication interface. The communication interface and the at least one processor are interconnected through a line, and the at least one processor is configured to run a computer program or instructions, to perform the method according to any one of the first aspect or the possible implementations of the first aspect, or perform the method according to any one of the second aspect or the possible implementations of the second aspect. The chip system may include a chip, or may include a chip and another discrete component.

### BRIEF DESCRIPTION OF DRAWINGS

FIG. 1 is a diagram of an architecture of a communication system to which an embodiment of this application is applied;
FIG. 2 is a diagram of an embodiment of a data processing method according to an embodiment of this application;
FIG. 3 is a diagram of another embodiment of a data processing method according to an embodiment of this application;
FIG. 4 is a diagram of another embodiment of a data processing method according to an embodiment of this application;
FIG. 5 is a diagram of a structure of a communication apparatus according to an embodiment of this application;
FIG. 6 is a diagram of another structure of a communication apparatus according to an embodiment of this application;
FIG. 7 is a diagram of another structure of a communication apparatus according to an embodiment of this application; and
FIG. 8 is a diagram of another structure of a communication apparatus according to an embodiment of this application.

### DESCRIPTION OF EMBODIMENTS

Embodiments of this application provide a data processing method and a related apparatus, to enable a secondary functional module of a terminal device to process a target signal in specified time, so as to ensure normal running of a communication system. Embodiments of this application further provide a corresponding computer-readable storage medium, a computer program product, and the like. The following provides detailed descriptions.

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

The terms "system" and "network" in the specification, claims, and accompanying drawings of this application may be used interchangeably. Unless otherwise specified, ordinal numbers such as "first" and "second" are used to distinguish between a plurality of objects, and are not intended to limit a sequence, a time sequence, priorities, or importance of the plurality of objects. It should be understood that the data used in such a way is interchangeable in proper circumstances, so that embodiments described herein can be implemented in orders other than the order illustrated or described herein. In addition, the terms "include" and "have" and any other variants are intended to cover non-exclusive inclusions. For example, a process, method, system, product, or device that includes a list of steps or units is not necessarily limited to those expressly listed steps or units, but may include other steps or units not expressly listed or inherent to such a process, method, product, or device.

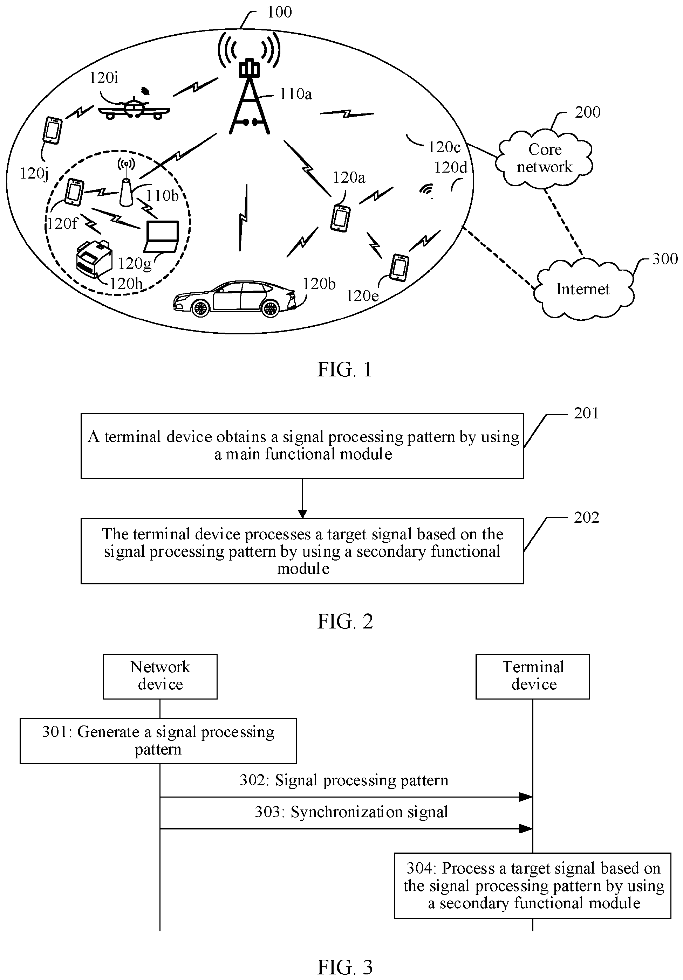

Refer to FIG. 1 below. FIG. 1 is a diagram of an architecture of a communication system according to an embodiment of this application.

As shown in FIG. 1, the communication system includes a radio access network 100 and a core network 200. Optionally, the communication system may further include an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless manner or a wired manner. A core network device and the network device may be different physical devices independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. It may be understood that FIG. 1 is only a diagram. The communication system may further include another network device, for example, may further include a wireless relay device and a wireless backhaul device that are not shown in FIG. 1.

The network device is an access device that is used by the terminal device to access the communication system in a wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like, or may be a module or a unit that completes some functions of a base station, for example, may be a central unit (central unit, CU), or may be a distributed unit (distributed unit, DU). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device may also be referred to as user equipment (user equipment, UE), a mobile station, a mobile terminal, or the like. The terminal device may be widely used in various scenarios, for example, device-to-device (device-to-device, D2D) communication, vehicle-to-everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable device, intelligent transportation, and a smart city. The terminal device may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal device are not limited in embodiments of this application.

The network device and the terminal device may be at fixed locations, or may be movable. The network device and the terminal device may be deployed on land, including an indoor or outdoor scenario and a handheld or vehicle-mounted scenario; may be deployed on water; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device. In other words, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 1 may be referred to as communication apparatuses that have a function of a network device, and 120a to 120j in FIG. 1 may be referred to as communication apparatuses that have a function of a terminal device.

The function of the network device may alternatively be performed by a module (for example, a chip) in the network device, or may be performed by a control subsystem that includes the function of the network device. The control subsystem that includes the function of the network device herein may be a control center in the foregoing application scenarios such as a smart grid, industrial control, intelligent transportation, and a smart city. The function of the terminal device may alternatively be performed by a module (for example, a chip or a modem) in the terminal device, or may be performed by an apparatus that includes the function of the terminal device.

Development of communication technologies brings a higher transmission rate and a more flexible scheduling mechanism, but causes increasingly high power consumption of a terminal device. Consequently, a method that can effectively reduce power consumption of the terminal device is required. In one method, when a wake-up signal is listened to, a main functional module of the terminal device is enabled to be in a sleep state or even a power-off state, and only a secondary functional module is enabled to process the wake-up signal. Power consumption of the secondary functional module is much lower than that of the main functional module. The wake-up signal generally uses a plurality of symbols to represent one information bit. As a result, transmission efficiency is low. Consequently, when processing the wake-up signal, the secondary functional module occupies an air interface time-frequency resource for long time. Therefore, a signal in the communication system cannot be normally transmitted, and normal running of the communication system is affected. In view of this, embodiments of this application provide a data processing method, so that a secondary functional module of a terminal device can process a wake-up signal in specified time, to ensure normal running of a communication system.

A main functional module is mainly configured to receive configuration information of an NR system, configuration information of a target signal, a signal processing pattern, and the like. The secondary functional module is mainly configured to receive the target signal and a synchronization signal.

In a design, the main functional module may be a main receiver of the terminal device or a receiving module, a main circuit, or the like in a main transceiver, and is used by the terminal device to receive common downlink signaling and data in NR. The secondary functional module may be an independent low power consumption receiver (also referred to as a wake-up receiver) or a low power consumption circuit. The low power consumption circuit may be, for example, a radio frequency circuit and a baseband circuit that have lower power consumption, or a ring oscillator that does not include a phase-locked loop, or a low noise amplifier with a high noise factor.

In another design, the secondary functional module may be a submodule (that is, a partial module) of the main functional module, or reuse some circuits, components, or the like with the main functional module. The secondary functional module includes fewer components than the main functional module during operating. For example, the secondary functional module does not include a fast Fourier transformation module, a complex channel decoding module, a low-density parity-check (Low-Density Parity-Check Code, LDPC) decoding module, and a polarization decoding module. Therefore, power consumption of the secondary functional module is lower than power consumption of the main functional module.

In another design, the main functional module may be a secondary functional module in a low power consumption operating mode. For example, the main functional module is a secondary functional module when the main functional module reduces an operating voltage, slows down a clock frequency, or reduces a sampling rate and a bit width of analog-to-digital sampling. Specific implementations of the main functional module and the secondary functional module are not limited in embodiments of this application.

It should be understood that the technical solutions in embodiments of this application may be applied to various communication systems, for example, a new radio (new radio, NR) system, a long term evolution (long term evolution, LTE) system, or another communication system (for example, a 6G mobile communication system) in a future communication network. In embodiments of this application, the NR system is used as an example for description. This is not specifically limited herein.

Refer to FIG. 2 below. FIG. 2 is a diagram of an embodiment of a data processing method according to an embodiment of this application. As shown in FIG. 2, this embodiment includes step 201 and step 202.

201: A terminal device obtains a signal processing pattern by using a main functional module.

The terminal device first obtains the signal processing pattern. The signal processing pattern carries information about first time or information about second time, the first time is time in which the terminal device determines that the secondary functional module processes a target signal sent by a network device, and the second time is time in which the terminal device determines that the secondary functional module does not process the target signal. Certainly, the signal processing pattern may alternatively carry both the information about the first time and the information about the second time. This is not specifically limited herein. The signal processing pattern may be obtained by the terminal device by using the main functional module, or may be obtained by using the secondary functional module.

Time granularities of the first time and the second time may be frames, subframes, slots, or symbols. In an NR system, one frame is 10 milliseconds, and one frame includes 10 subframes, in other words, each subframe is 1 millisecond. A quantity of slots included in one subframe is related to a subcarrier spacing. The subcarrier spacing in the NR system includes 15 kHz, 30 kHz, 60 kHz, 120 kHz, and 240 kHz. At 15 kHz, one subframe includes one slot. At 30 kHz, one subframe includes two slots. At 60 kHz, one subframe includes four slots. At 120 kHz, one subframe includes eight slots. At 240 kHz, one subframe includes 16 slots. Each slot includes 14 symbols in a normal cyclic prefix (Cyclic Prefix, CP), and includes 12 symbols in an extended CP. The symbols are generally OFDM symbols. The time granularities of the first time and the second time may be the same or different. For example, if the time granularity of the first time is a frame, the time granularity of the second time may be a frame, or may be a subframe or a slot. A value relationship between the time granularity of the first time and the time granularity of the second time is not limited.

Optionally, the signal processing pattern further carries information about third time, and the third time is also time in which the terminal device determines that the secondary functional module processes the target signal. A time granularity of the third time may be a frame, a subframe, a slot, or a symbol, but the third time and the first time use different time granularities. In other words, the signal processing pattern may include information about different time granularity levels. For example, if the time granularity of the first time is a frame, the time granularity of the third time may be a subframe, a slot, or a symbol. To be specific, the signal processing pattern includes information about two time granularity levels, so that the secondary functional module can process the target signal more precisely. It may be understood that the signal processing pattern may further include information about more levels, for example, include four time granularity levels, to be specific, include information about four levels: a frame, a subframe, a slot, and a symbol.

Optionally, the signal processing pattern further carries information about fourth time, and the fourth time is also time in which the terminal device determines that the secondary functional module does not process the target signal. Similarly, a time granularity of the fourth time may be a frame, a subframe, a slot, or a symbol, and the fourth time and the second time use different time granularities. For example, if the time granularity of the second time is a slot, the time granularity of the fourth time is a symbol. Certainly, alternatively, the time granularity of the second time may be a symbol, and the time granularity of the fourth time may be a slot. In other words, a value relationship between the time granularity of the second time and the time granularity of the fourth time is not limited, and the same is true for the first time and the third time.

It should be noted that when the signal processing pattern includes only information about one time granularity level, for example, the second time is a specific slot, the terminal device does not process the target signal on all symbols in the slot. For another example, if the second time is a specific symbol, the terminal device does not process the target signal on a corresponding symbol in each slot. When the signal processing pattern includes information about a plurality of time granularity levels, time in which the target signal can be processed is determined based on a small time granularity level. For example, the signal processing pattern includes information about a slot level and a symbol level. A specific slot is the second time, and the first two symbols of the slot are the fourth time. Although a slot-level signal processing pattern indicates that the target signal cannot be processed in the slot, because a symbol-level signal processing pattern indicates that the target signal cannot be processed only on the first two symbols in the slot, the terminal device finally determines that the secondary functional module does not process the target signal only on the first two symbols in the slot, and may process the target signal on the last 12 symbols (where a normal CP used as an example) in the slot. In this case, the signal processing pattern may alternatively indicate that the slot is the first time. This is not specifically limited herein.

If the first time is a specific slot, and the fourth time is a specific symbol, the terminal device does not process the target signal on a corresponding symbol in the slot.

It should be noted that, when the signal processing pattern includes only information about one time granularity level, time except the first time is the second time. In other words, the terminal device may obtain, from time in which the target signal is processed, time in which the target signal cannot be processed, or obtain, from time in which the target signal cannot be processed, time in which the target signal can be processed. For example, in a case of seven slots, if the signal processing pattern indicates that the first three slots are time in which the target signal can be processed, the terminal device may obtain that the target signal cannot be processed in the last four slots.

When the signal processing pattern includes information about a plurality of time granularity levels, the terminal device may obtain, from time in which the target signal is processed, time in which the target signal cannot be processed in same time granularities, or obtain, from time in which the target signal cannot be processed, time in which the target signal can be processed in same time granularities, but first perform processing at a large time granularity. For example, similarly, for seven slots, if a slot-level signal processing pattern indicates that the target signal can be processed in the first three slots, and a symbol-level signal processing pattern indicates that the target signal cannot be processed on the first two symbols, the terminal device may obtain that the target signal cannot be processed in the last four slots, and the target signal can be processed on the last 12 symbols. However, because the target signal cannot be processed in the last four slots, the terminal device finally obtains that the target signal can be processed in the last 12 symbols in the first three slots. Further, a signal processing pattern at a small time granularity level may be set for each time unit in a signal processing pattern at a large time granularity level. For example, for seven slots, a slot-level signal processing pattern indicates that the target signal can be processed in the first three slots, and different symbol-level signal processing patterns may be configured for each of the three slots. For example, a symbol-level signal processing pattern of a slot 1 indicates that the target signal cannot be processed on two symbols, and symbol-level signal processing patterns of a slot 2 and a slot 3 indicate that processing can be performed on all symbols in the slots.

The signal processing pattern may be a mask pattern (mask pattern), and the mask pattern is a string of binary code. The following uses the mask pattern as an example to describe carried information. For example, the signal processing pattern includes information about one time granularity level. In the signal processing pattern, 0 is used to represent time in which the target signal can be processed, and 1 is used to represent time in which the target signal cannot be processed. Alternatively, in the signal processing pattern, 1 is used to represent time in which the target signal can be processed, and 0 is used to represent time in which the target signal cannot be processed. In this embodiment, an example in which 0 represents time in which the target signal can be processed is used for description. The signal processing pattern carries information about seven slots, and the first three slots cannot be used to process the target signal, in other words, the first three slots are the second time, and the last four slots are the first time. Therefore, the signal processing pattern may be 1110000. In this case, the signal processing pattern carries both the information about the first time and the information about the second time. In addition, the signal processing pattern may alternatively be 111. In this case, it needs to be further noted that the signal processing pattern carries only information about the first three slots in the seven slots, and the terminal device may obtain, based on this, that the last four slots are the first time. Alternatively, the signal processing pattern is 0000. In this case, it needs to be noted that the signal processing pattern carries only information about the last four slots in the seven slots, and the terminal device may obtain, based on this, that the first three slots are the second time.

Further, the signal processing pattern includes information about two levels of time granularities (where a slot-level signal processing pattern is 1110000). For example, if the first two symbols in each of the seven slots cannot be used to process the target signal, in other words, the first two symbols are the fourth time, a symbol-level signal processing pattern in each of the first three slots is 11111111111111, and a symbol-level signal processing pattern in each of the last four slots is 110000000000. Certainly, similar to the slot-level signal processing pattern, a symbol-level signal processing pattern in the last four slots may also be 11 or 0000000000. Details are not described herein again. In addition, for the first three slots that cannot be used to process the target signal, the signal processing pattern may not include information about a symbol-level time granularity level of the three slots, but includes only information about a symbol-level time granularity level of the last four slots.

In addition, the signal processing pattern may alternatively be an indication message, and the indication message directly indicates that some time is the first time, or some time is the second time. For example, for the foregoing seven slots, the indication message indicates that the first three slots are the second time, or the last four slots are the first time. For ease of description, the following uses an example in which the signal processing pattern is a mask pattern for description in this embodiment. This is not specifically limited.

202: The terminal device processes the target signal based on the signal processing pattern by using the secondary functional module.

After obtaining the signal processing pattern, the terminal device processes, by using the secondary functional module, the target signal in the first time and the third time based on information carried in the signal processing pattern, and does not process the target signal in the second time or the fourth time.

The target signal may be a wake-up signal, and is used to wake up the main functional module in a sleep state, or enable the main functional module to power on and operate, or enable the main functional module to switch to a normal power consumption mode. For example, in the sleep state, the main functional module may turn off modules such as a receiving antenna, an amplifier, and a filter of a radio frequency unit, and turn on only a crystal oscillator to maintain a clock, so that the main functional module can be started quickly subsequently. The power-off state is that the main functional module is powered off, to be specific, all modules included in the main functional module are turned off. Alternatively, the target signal may be a first synchronization signal, and is used to perform time synchronization between the terminal device and the network device. In addition, the target signal may alternatively be other control signaling or information, for example, a beacon (Beacon) signal, a paging indication (Paging Indication), a random access indication (RACH indication), or an identity document (Identity document, ID) of the network device or the terminal device. This is not specifically limited. In other words, for the target signal such as the wake-up signal and the first synchronization signal, the secondary functional module processes the target signal only in the first time and the third time, and does not process the target signal in the second time or the fourth time.

For example, in the NR system, physical downlink control channels (Physical Downlink Control Channels, PDCCHs) are configured in a control resource set (Control Resource Set, CORESET) and a search space set (search space set). The CORESET is generally a frequency domain in which a PDCCH is sent, and the search space set is generally a time domain in which a PDCCH is sent. The search space set generally occupies the first two or three symbols in one slot in one sending periodicity. Therefore, to ensure that the target signal does not affect sending of the PDCCH by the network device, and to ensure normal running of the NR system to the greatest degree, the target signal needs to be sent starting from a 3^{rd} or 4^{th} symbol, to ensure that the first two or three symbols can be reserved to ensure that the PDCCH can be normally sent. In other words, the second time indicated by the signal processing pattern is the first two symbols (where for example, the first two symbols are occupied) of one slot, and the first time is the last 12 symbols of one slot. It is assumed that a periodicity of the search space set is 1, in other words, a PDCCH can be sent in each slot. In this case, the signal processing pattern may include only information about one level of time granularity (a symbol level). After obtaining the signal processing pattern, the terminal device does not process the target signal on the first two symbols in each slot. If a periodicity of the search space set is greater than 1, the signal processing pattern may include information about two levels of time granularities. For example, if a periodicity of the search space set is four slots, a first-level slot-level signal processing pattern indicates a specific slot in each search space set periodicity that is the first time or the second time. A second-level symbol-level signal processing pattern indicates a specific symbol that is in the second time and on which the terminal device needs to perform processing or does not perform processing. For a form of the signal processing pattern, refer to step 201. Details are not described herein again.

It should be noted that the terminal device processes the target signal in the first time and the third time by using the secondary functional module, and does not process the target signal in the second time or the fourth time. In other words, the terminal device may receive the target signal in the first time and the third time by using the secondary functional module, and does not receive the target signal in the second time or the fourth time. Alternatively, the terminal device may perform at least one of operations of measurement, channel estimation, demodulation, and decoding on the target signal in the first time and the third time by using the secondary functional module, and does not perform these operations on the target signal in the second time or the fourth time. In addition, the terminal device may further perform an operation on the target signal in the first time and the third time by using the secondary functional module, for example, perform a differential operation, an addition operation, or a multiplication operation on the target signal, and perform no operation processing on the target signal in the second time and the fourth time. A specific form in which the terminal device processes the target signal by using the secondary functional module is not limited in embodiments of this application.

In this embodiment, the signal processing pattern includes information about a plurality of levels of time granularities, so that the solution is more flexible and the carried information is more specific. The secondary functional module of the terminal device processes the target signal based on the signal processing pattern in the first time and the third time, and does not process the target signal in the second time or the fourth time. Therefore, the target signal does not occupy a channel for long time during transmission. For important signals such as control signaling and a reference signal in a communication system, transmission time of these signals may be set to the second time, so that no conflict with these signals is caused during transmission of the target signal, and the target signal can better coexist with the NR system, to ensure stable running of the NR system.

However, when receiving the target signal, the secondary functional module of the terminal device may not achieve time synchronization with the network device. In other words, the terminal device may not know a frame, a subframe, a slot, or a symbol in which the currently received signal is located. Therefore, even if the terminal device obtains the signal processing pattern, the terminal device cannot process the target signal based on the signal processing pattern. To resolve this problem, the network device sends a synchronization signal or a beacon signal to the terminal device, to enable the terminal device to perform time synchronization, so that the terminal device may correspond to actual time indicated in the signal processing pattern.

The synchronization signal sent by the network device may be the first synchronization signal and/or a second synchronization signal. The first synchronization signal is a target signal, and the second synchronization signal is a synchronization signal additionally sent by the network device before the terminal device processes the wake-up signal based on the signal processing pattern. The terminal device receives the synchronization signal by using the secondary functional module. A method for performing time synchronization by the terminal device by using the synchronization signal is described in detail below.

For the first synchronization signal, because the first synchronization signal is a target signal, the secondary functional module processes the first synchronization signal based on the signal processing pattern. In other words, the first synchronization signal is not continuously sent in terms of time. When receiving the first synchronization signal, the terminal device separately assumes, based on the obtained signal processing pattern, that the network device has a signal to send or has no signal to send in time in which the secondary functional module indicated by the signal processing pattern cannot process the target signal, generates a corresponding local signal based on the prestored first synchronization signal and an assumed signal value, and then compares the local signal with the received first synchronization signal, to implement time synchronization.

For example, a length of the first synchronization signal sent by the network device is 18 bits, and 2:1 Manchester coding is used. In other words, two symbols are occupied to encode each bit, and 36 symbols need to be occupied, which are respectively s0, s1, ..., and s35, where a value of each symbol may be 0 or 1. The signal processing pattern includes only information about one level of time granularity (a symbol level), 0 is used to represent the first time, 1 is used to represent the second time, and the signal processing pattern is 11000000000000. In other words, the signal processing pattern indicates that the periodicity of the search space set is one slot, and the first two symbols in each periodicity are not used to process the target signal (that is, the two symbols may be used to send a PDCCH signal). If starting time for sending the first synchronization signal is aligned with a 1^{st} symbol in one slot, when the first synchronization signal is sent, 0^{th}, 1^{st}, 14^{th}, 15^{th}, 28^{th}, and 29^{th} symbol locations are occupied by the search space set, and cannot be used to send the first synchronization signal (counting from 0). However, when receiving the first synchronization signal, the terminal device should not consider signals at the symbol locations 0^{th}, 1^{st}, 14^{th}, 15^{th}, 28^{th}, and 29^{th} as first synchronization signals. Therefore, the terminal device should not process the signals at these symbol locations. Based on this, a method for receiving the first synchronization signal by the terminal device is as follows: The terminal device separately assumes, on 0^{th}, 1^{st}, 14^{th}, 15^{th}, 28^{th}, and 29^{th} symbols of local signals, whether a signal is transmitted (that is, whether a PDCCH signal is transmitted), where 0 is used to represent that no PDCCH signal is transmitted, and 1 is used to represent that a PDCCH signal is transmitted. In addition, because the PDCCH sent in the search space set occupies two symbols at the same time, only PDCCH signals can be transmitted on both 0 and 1, or no PDCCH signal can be transmitted on either 0 or 1. Similarly, this is also true on the 14^{th}, 15^{th}, 28^{th}, and 29^{th} symbols. Symbol values of the first synchronization signal are sequentially placed at other symbol locations of the local signal. Therefore, there are eight groups of local signals actually generated by the terminal device, which are respectively shown as follows:
00_{S0S1S2S3S4S56S7S8S9S10S11}00_{S12S13S14S15S16S17S18S19S20S21S22S23}00_{S24S25S26S27S28S29S30S31S32S33S34S35} 00_{S0S1S2S3S4S5S6S7S8S9S10S11}00_{S12S13S14S15S16S17S18S19S20S21S22S23}11_{S24S25S26S27S28S29S30S31S32S33S34S35} 00_{S0S1S2S3S4S5S6S7S8S9S10S11}11_{S12S13S14S15S16S17S18S19S20S21S22S23}00_{S24S25S26S27S28S29S30S31S32S33S34S35} 00_{S0S1S2S3S4S5S6S7S8S9S10S11}11_{S12S13S14S15S16S17S18S19S20S21S22S23}11_{S24S25S26S27S28S29S30S31S32S33S34S35} 11_{S0S1S2S3S4S5S6S7S8S9S10S11}00_{S12S13S14S15S16S17S18S19S20S21S22S23}00_{S24S25S26S27S28S29S30S31S32S33S34S35} 11_{S0S1S2S3S4S5S6S7S8S9S10S11}00_{S12S13S14S15S16S17S18S19S20S21S22S23}11_{S24S25S26S27S28S29S30S31S32S33S34S35} 11_{S0S1S2S3S4S5S6S7S8S9S10S11}11_{S12S13S14S15S16S17S18S19S20S21S22S23}00_{S24S25S26S27S28S29S30S31S32S33S34S35} 11_{S0S1S2S3S4S5S6S7S8S9S10S11}11_{S12S13S14S15S16S17S18S19S20S21S22S23}11_{S24S25S26S27S28S29S30S31S32S33S34S35}

Herein, 00 or 11 represents an assumed PDCCH value inserted into the synchronization signal, or may be another assumed value in an actual system. This is not limited in embodiments of this application.

The terminal device compares the generated local signal with the received first synchronization signal for calculation. A common comparison method is to perform a shift correlation operation on the local signal and the first synchronization signal. If a high correlation peak occurs, it indicates that the first synchronization signal and the local signal are the same at the moment, it indicates that time synchronization is achieved, and the terminal device may implement time synchronization with the network device based on the corresponding local signal. If no high correlation peak occurs in the eight groups of local signals, the received signal is shifted backward by time of one symbol and then an obtained signal is compared with the local signal until time synchronization is implemented.

Further, the first synchronization signal may further include time information. For example, the network device and the terminal device may predefine that sending starting time of the first synchronization signal is starting time of one frame of the network device. Similarly, the terminal device performs a comparison operation on the generated local signal and the first synchronization signal. After a high correlation peak is found, it indicates that the local signal is the same as the first synchronization signal, so that the terminal device can implement time synchronization with the network device. In addition, the terminal device knows a starting location of the frame, so that the terminal device can implement frame synchronization with the network device. It may be understood that the time information included in the first signal may be defined in a plurality of manners. For example, the sending starting time of the first synchronization signal may be defined as starting time of one subframe or starting time of one slot of the network device, or a 1^{st} symbol of the first synchronization signal is defined as a 1^{st} symbol of a slot, or ending time of the first synchronization signal or a special frame, subframe, slot, and symbol, and the like corresponding to a specific symbol may be defined. This is not limited in embodiments of this application. The terminal device may implement subframe/slot/symbol synchronization with the network device in the foregoing definition manner.

For the second synchronization signal, because the second synchronization signal is not a target signal, and the secondary functional module does not process the second synchronization signal based on the signal pattern, the second synchronization signal is sent continuously in terms of time. The terminal device may first process the second synchronization signal, to achieve time synchronization with the network device, and may subsequently process the target signal based on the signal processing pattern. A method for processing, by the terminal device, the second synchronization signal to achieve time synchronization is similar to a method for processing the first synchronization signal by the terminal device. Similarly, the second synchronization signal may include time information, or may not include time information. The terminal device performs a comparison operation on the local signal and the second synchronization signal, to achieve time synchronization. Details are not described herein again. In addition, because the second synchronization signal is continuously sent, the terminal device can achieve time synchronization by generating only one local signal or performing a comparison operation on a small quantity of local signals. Therefore, the terminal device more easily implements time synchronization with the network device by using the second synchronization signal.

In embodiments of this application, there may be a plurality of methods for obtaining the signal processing pattern by the terminal device. The following separately describes the methods.
1. A terminal device receives a signal processing pattern sent by a network device.

In this embodiment, the network device generates the signal processing pattern and then sends the signal processing pattern to the terminal device. The following provides descriptions with reference to FIG. 3. As shown in FIG. 3, another embodiment of a data processing method provided in an embodiment of this application includes the following steps.

301: The network device generates the signal processing pattern.

The network device generates the signal processing pattern based on cell-specific configuration information or terminal device-specific configuration information. The cell-specific configuration information is cell-level information configured by the network device for a managed cell, and the terminal device-specific configuration information is dedicated information configured by the network device for a terminal device in the cell. The cell-specific configuration information and the terminal device-specific configuration information include sending time of an NR signal and a channel, such as a PDCCH, a reference signal (reference signal, RS), or a synchronization signal block (Synchronization Signal Block, SSB). To ensure normal running of an NR system to the greatest degree, the network device needs to avoid the sending time of the NR signal and the channel when sending a target signal. Based on this, the network device may generate the signal processing pattern based on the sending time of the NR signal and the channel. Time (second time and fourth time) in which the target signal cannot be processed and that is indicated by the signal processing pattern is the sending time of the NR signal and the channel, and time (first time and third time) in which the target signal is processed and that is indicated by the signal processing pattern is time other than the sending time of the NR signal and the channel.

In a possible implementation, the signal processing pattern may be a mask pattern. For example, a configuration periodicity of a search space set in a cell is four slots, one slot is sent in each periodicity, and the first two symbols are occupied in the slot. In addition, a periodic tracking reference signal (tracking reference signal, TRS) is configured in the cell, a sending periodicity of the tracking reference signal is 20 slots, two consecutive slots are sent in each periodicity, and a 3^{rd} symbol and a 7^{th} symbol (counting from 0) are sent in each slot. When the target signal is sent, the search space set and the TRS need to be avoided. Therefore, the network device may configure information about two levels of time granularities in the signal processing pattern. A 1^{st} level is a slot-level signal processing pattern, and a 2^{nd} level is a symbol-level signal processing pattern. For example, 20 slots are a periodicity. 0 is used to represent time in which the target signal can be processed, and 1 is used to represent time in which the target signal cannot be processed. In this case, the slot-level signal processing pattern may be represented as 11001000100010001000 (where a 1^{st} slot in every four slots needs to be used to send the search space set, and the first two slots in every 20 slots need to be used to send the TRS).

Further, a symbol-level signal processing pattern is configured for a slot identified as 1 in the slot-level signal processing pattern. For example, each slot includes 14 symbols, and the slots and the symbols start to be counted from 0. In this case, a symbol-level signal processing pattern of a 0^{th} slot is 11010001000000 (where the 0^{th} slot needs to be used to send a search space set and a TRS, the first two symbols are used to send the search space set, and 3^{rd} and 7^{th} symbols are used to send the TRS). A symbol-level signal processing pattern of a 1^{st} slot is 00010001000000 (where the 1^{st} slot is used to transmit only a TRS, and 3^{rd} and 7^{th} symbols are used to transmit the TRS). Symbol-level signal processing patterns of 4^{th}, 8^{th}, 12^{th}, and 16^{th} slots are 11000000000000 (where the 4^{th}, 8^{th}, 12^{th}, and 16^{th} slots are used to transmit only search space sets, and the first two symbols of each slot are used to transmit the search space set).

In another possible implementation, the signal processing pattern may directly indicate a set of the first time and/or the third time, or indicate a set of the second time and/or the fourth time. For example, the foregoing example in which the signal processing pattern is a mask pattern is used. In this case, the signal processing pattern also includes information about two levels of time granularity levels, a slot-level signal processing pattern is {periodicity: 20 slots, slots in which the target signal is not processed: 0, 1, 4, 8, 12, 16}, and a symbol-level signal processing pattern is {symbols on which no processing is required in a slot 0: 0, 1, 3, 7, symbols on which no processing is required in a slot 1: 3, 7, symbols on which no processing is required in a slot 4: 0, 1, symbols on which no processing is required in a slot 8: 0, 1, symbols on which no processing is required in a slot 12: 0, 1, and symbols on which no processing is required in a slot 16: 0, 1}. Certainly, in the signal processing pattern, a slot level may alternatively indicate a slot for processing the target signal, or a symbol level may indicate a symbol for not processing the target signal. This is not specifically limited.

It may be understood that the signal processing pattern may include not only the information about the two levels of time granularity levels, but also information about three levels of time granularity levels, for example, information about three levels: a frame, a subframe, and a slot, or information of three levels: a subframe, a slot, and a symbol. In addition, the signal processing pattern may include information about four time granularity levels (that is, including a frame, a subframe, a slot, and a symbol). This is not specifically limited herein.

302: The network device sends the signal processing pattern to the terminal device.

After generating the signal processing pattern, the network device sends indication information to the terminal device. The indication information includes the signal processing pattern, and the terminal device may receive the signal processing pattern by using a main functional module. The network device may send the signal processing pattern to the terminal device by using higher layer signaling. The higher layer signaling may be sent through a radio resource control RRC (Radio resource control) layer or a media access control (Media Access Control, MAC) layer, and the higher layer signaling may be system information or terminal device-specific signaling. Certainly, the network device may alternatively transmit the signal processing pattern by using physical layer signaling.

The terminal device receives the signal processing pattern by using the main functional module. Specifically, when the terminal device is connected to the network device, the network device sends the signal processing pattern to the terminal device, and the main functional module receives the signal processing pattern. After receiving the signal processing pattern, if the main functional module does not perform another task, the main functional module enters a sleep state until a wake-up signal processed by a secondary functional module wakes up the main functional module.

303: The network device sends a synchronization signal to the terminal device.

Before enabling the secondary functional module to process the target signal based on the signal processing pattern, the terminal device first performs time synchronization with the network device. A time synchronization method is described in detail above. Details are not described herein again.

304: The terminal device processes the target signal based on the signal processing pattern by using the secondary functional module.

Step 304 in this embodiment is similar to step 202 in the foregoing embodiment shown in FIG. 2. Details are not described herein again.

In this embodiment, the network device generates the signal processing pattern, and then sends the signal processing pattern to the terminal device after generating the signal processing pattern. The secondary functional module of the terminal device processes the target signal in the first time and the third time based on the signal processing pattern, and does not process the target signal in the second time or the fourth time. Therefore, the target signal does not occupy a channel for long time during transmission. For important signals such as control signaling and a periodic signal in a communication system, transmission time of these signals may be set to the second time, so that no conflict with these signals is caused during transmission of the target signal, and the target signal can better coexist with the NR system, to ensure stable running of the NR system.

2. A terminal device generates a signal processing pattern.

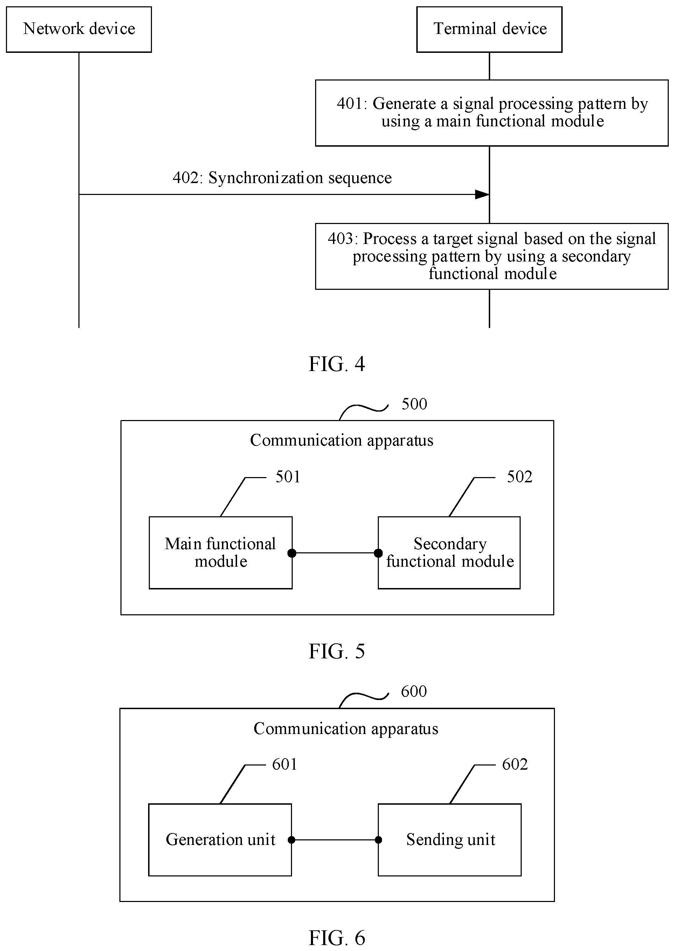

In this embodiment, the terminal device generates the signal processing pattern based on configuration information sent by a network device. The following provides descriptions with reference to FIG. 4. As shown in FIG. 4, another embodiment of a data processing method provided in an embodiment of this application includes the following steps.

401: The terminal device generates the signal processing pattern by using a main functional module.

After being connected to the terminal device, the network device sends indication information to the terminal device by using physical layer signaling, RRC layer signaling, MAC layer signaling, or the like. The indication information includes cell-specific configuration information or terminal device-specific configuration information. Higher layer signaling may be system information sent through an RRC layer, for example, cell broadcast information, or terminal device-specific signaling. The cell-specific configuration information or the terminal device-specific configuration information may include sending time of an NR signal and a channel, configuration information and sending time of a target signal, and the like.

The terminal device receives the indication information by using the main functional module, and the main functional module parses the cell-specific configuration information or the terminal device-specific configuration information in the indication information, and generates the signal processing pattern based on a parsing result. A method for generating the signal processing pattern by the terminal device and a form of the signal processing pattern are similar to those in step 301 in the embodiment shown in FIG. 3. Details are not described herein again.

After the main functional module generates the signal processing pattern, if there is no other task, the main functional module enters a sleep state or is in a power-off state until a wake-up signal in the target signal wakes up the main functional module.

Optionally, the cell-specific configuration information and the terminal device-specific configuration information may further include priorities of the NR signal, the channel, and the target signal. In other words, the sending time of the NR signal is not necessarily time in which the target signal cannot be processed, and needs to be considered with reference to the priority. For example, if a priority of a specific NR signal is lower than that of the target signal, the target signal can be processed in sending time of the NR signal, in other words, the sending time of the NR signal is first time or third time indicated by the signal processing pattern. However, some signals, for example, control signaling, are important and have a higher priority than the target signal. In this case, the target signal cannot be processed in sending time of these signals, in other words, the sending time of these signals is second time or fourth time indicated by the signal processing pattern.

For example, PDCCHs in a cell are configured in three CORESETs: a CORESET 0, a CORESET 1, and a CORESET 2, and two TRSs are further configured in the cell: a TRS 1 and a TRS 2. Priority information is the PDCCH configured in the CORESET 0: a priority 0, the PDCCH configured in the CORESET 1: a priority 2, the PDCCH configured in the CORESET 2: a priority 2, a TRS 0: a priority 0, and the TRS 1: a priority 2, where a smaller number indicates a higher priority. If a priority of the target signal is 1, it can be learned that the priorities of the PDCCH configured in the CORESET 0 and the TRS 0 are higher than that of the target signal, and other priorities are lower than that of the target signal. In this case, when the target signal is sent, only sending time of the PDCCH configured in the CORESET 0 and the TRS 0 needs to be avoided. Therefore, the sending time of the PDCCH configured in the CORESET 0 and the TRS 0 is the second time or the fourth time, and sending time of the PDCCHs configured in the remaining CORESETs and the TRS 1 is the first time or the third time. When the priority of the target signal is the same as the priority of the NR signal or the channel, for example, the priority of the target signal is 0, in other words, the priority of the target signal is the same as the priorities of the PDCCH configured in the CORESET 0 and the TRS 0, the sending time of the PDCCH configured in the CORESET 0 and the TRS 0 may be set to allow a secondary functional module to process the target signal, or may be set to not allow the secondary functional module to process the target signal, and may be set based on an actual situation. This is not specifically limited.

Optionally, the cell-specific configuration information or the terminal device-specific configuration information may directly indicate that the target signal cannot be processed or can be processed in sending time of specific NR signals and channels. For example, for the foregoing example of the PDCCH and the TRS, the cell-specific configuration information or the terminal device-specific configuration information may directly indicate that the target signal cannot be processed in the sending time of the PDCCH configured in the CORESET 0 and the TRS 0, in other words, the sending time of the PDCCH configured in the CORESET 0 and the TRS 0 is the second time or the fourth time.

Optionally, the terminal device may not generate the signal processing pattern based on the configuration information sent by the network device. Instead, the signal processing pattern has been initially defined in the terminal device. For example, the signal processing pattern has been defined in the terminal device based on a protocol before delivery. The terminal device processes the target signal only in the first time and the third time that are initially defined, and does not process the target signal in the second time and the fourth time.

402: The network device sends a synchronization signal to the terminal device.

The network device first performs time synchronization with the terminal device, and then processes the target signal based on time indicated by the signal processing pattern. A method for performing time synchronization by the terminal device based on the synchronization signal sent by the network device is described in detail above. Details are not described herein again.

403: The terminal device processes the target signal based on the signal processing pattern by using the secondary functional module.

Step 403 in this embodiment is similar to step 202 in the foregoing embodiment shown in FIG. 2. Details are not described herein again.

In this embodiment, the terminal device generates the signal processing pattern, so that the network device does not need to send the signal processing pattern, to reduce signaling overheads.

The foregoing describes embodiments of this application from a perspective of methods. The following describes communication apparatuses in embodiments of this application from a perspective of specific apparatus implementations.

Refer to FIG. 5. An embodiment of this application provides a diagram of a communication apparatus 500. The communication apparatus 500 includes a main functional module 501 and a secondary functional module 502.

The main functional module 501 is configured to obtain a signal processing pattern. The signal processing pattern indicates first time in which the secondary functional module 502 processes a target signal, or second time in which the secondary functional module 502 determines not to process the target signal, a time granularity of the first time is one of a frame, a subframe, a slot, and a symbol, and a time granularity of the second time is one of a frame, a subframe, a slot, and a symbol. A function of obtaining the signal processing pattern by the main functional module 501 may alternatively be performed by the secondary functional module 502.

The secondary functional module 502 is configured to process the target signal based on the signal processing pattern.

Optionally, the main functional module 501 is specifically configured to receive indication information sent by a network device. The indication information includes the signal processing pattern.

Optionally, the main functional module 501 is specifically configured to: receive indication information sent by a network device, where the indication information includes cell-specific configuration information or terminal device-specific configuration information; and generate the signal processing pattern based on the indication information.

Optionally, the signal processing pattern further indicates third time in which the secondary functional module 502 processes the target signal, a time granularity of the third time is one of a frame, a subframe, a slot, and a symbol, and the first time and the third time use different time granularities.

Optionally, the signal processing pattern further indicates fourth time in which the secondary functional module 502 determines not to process the target signal, a time granularity of the fourth time is one of a frame, a subframe, a slot, and a symbol, and the second time and the fourth time use different time granularities.

Optionally, the target signal includes a first synchronization signal, where the first synchronization signal is used by a terminal device to perform time synchronization with the network device.

Optionally, the target signal further includes a wake-up signal, and the wake-up signal is used to wake up the main functional module 501 to operate.

Optionally, the secondary functional module 502 is further configured to receive a second synchronization signal, where the second synchronization signal is used by the terminal device to perform time synchronization with the network device.

The units in the communication apparatus 500 perform the operations of the terminal device in the embodiments shown in FIG. 2 to FIG. 4. Details are not described herein again.

Refer to FIG. 6 below. An embodiment of this application provides a diagram of a communication apparatus 600. The communication apparatus 600 includes a generation unit 601 and a sending unit 602.

The generation unit 601 is configured to generate indication information.

The sending unit 602 is configured to send the indication information to a terminal device. The terminal device includes a main functional module and a secondary functional module, the indication information indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol.

Optionally, the indication information includes a signal processing pattern generated by a network device based on cell-specific configuration information or terminal device-specific configuration information.

Optionally, the indication information includes cell-specific configuration information or terminal device-specific configuration information.

Optionally, the indication information further indicates third time in which the secondary functional module processes the target signal, a time granularity of the third time is one of a frame, a subframe, a slot, and a symbol, and the first time and the third time use different time granularities.

Optionally, the indication information further indicates fourth time in which the secondary functional module determines not to process the target signal, a time granularity of the fourth time is one of a frame, a subframe, a slot, and a symbol, and the second time and the fourth time use different time granularities.

Optionally, the target signal includes a first synchronization signal, where the first synchronization signal is used by the terminal device to perform time synchronization with the network device.

Optionally, the target signal further includes a wake-up signal, and the wake-up signal is used to wake up the main functional module to operate.

Optionally, the sending unit 602 is further configured to send a second synchronization signal to the terminal device, where the second synchronization signal is used by the terminal device to perform time synchronization with the network device.

The units in the communication apparatus 600 perform the operations of the network device in the embodiments shown in FIG. 2 to FIG. 4. Details are not described herein again.

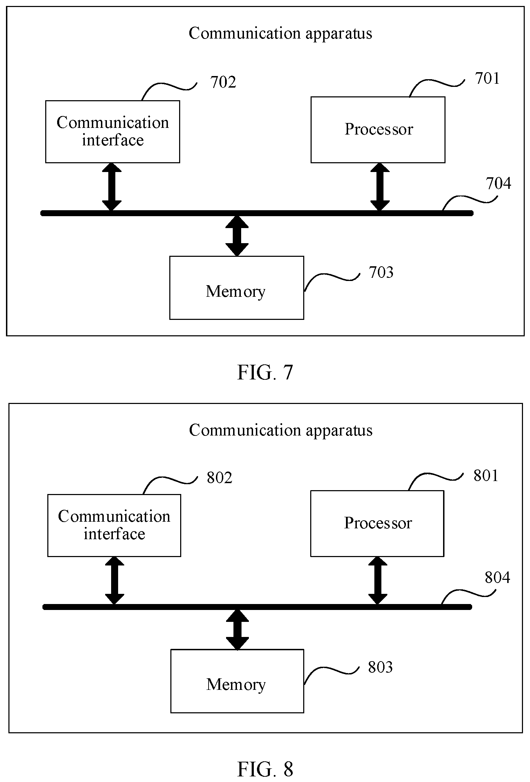

FIG. 7 is a possible diagram of a structure of a communication apparatus according to an embodiment of this application, and the communication apparatus includes a processor 701, a communication interface 702, a memory 703, and a bus 704. The processor 701, the communication interface 702, and the memory 703 are connected to each other through the bus 704. In this embodiment of this application, the processor 701 is configured to control and manage an action of the communication apparatus. For example, the processor 701 is configured to perform the steps performed by the terminal device in the method embodiments in FIG. 2 to FIG. 4. The communication interface 702 is configured to support the communication apparatus in communication. The memory 703 is configured to store program code and data of the communication apparatus.

The processor 701 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 704 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 7, but this does not mean that there is only one bus or only one type of bus.

FIG. 8 is a possible diagram of a structure of a communication apparatus according to an embodiment of this application, and the communication apparatus includes a processor 801, a communication interface 802, a memory 803, and a bus 804. The processor 801, the communication interface 802, and the memory 803 are connected to each other through the bus 804. In this embodiment of this application, the processor 801 is configured to control and manage an action of the communication apparatus. For example, the processor 801 is configured to perform steps performed by the network device in the method embodiments in FIG. 2 to FIG. 4. The communication interface 802 is configured to support the communication apparatus in communication. The memory 803 is configured to store program code and data of the communication apparatus.

The processor 801 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 804 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 8, but this does not mean that there is only one bus or only one type of bus.

An embodiment of this application further provides a computer-readable storage medium. The computer-readable storage medium includes instructions. When the instructions are run on a computer, the computer is enabled to perform the method according to the embodiments shown in FIG. 2 to FIG. 4.

An embodiment of this application further provides a computer program product including instructions. When the computer program product runs on a computer, the computer is enabled to perform the method according to the embodiments shown in FIG. 2 to FIG. 4.

An embodiment of this application further provides a chip system. The chip system includes at least one processor and a communication interface. The communication interface and the at least one processor are interconnected through a line. The at least one processor is configured to run a computer program or instructions, to perform the method according to the embodiments shown in FIG. 2 to FIG. 4.

It may be clearly understood by a person skilled in the art that, for the purpose of convenient and brief description, for a detailed operating process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data processing method, applied to a terminal device or a chip system of the terminal-side device, wherein the terminal device comprises a main functional module and a secondary functional module, power consumption of the secondary functional module is lower than that of the main functional module, and the method comprises:
obtaining, by the terminal device, a signal processing pattern by using the main functional module, wherein the signal processing pattern indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol; and
processing, by the terminal device, the target signal based on the signal processing pattern by using the secondary functional module.

2. The method according to claim 1, wherein the obtaining, by the terminal device, a signal processing pattern comprises:
receiving, by the terminal device, indication information sent by a network device, wherein the indication information comprises the signal processing pattern.

3. The method according to claim 1, wherein the obtaining, by the terminal device, a signal processing pattern comprises:
receiving, by the terminal device, indication information sent by a network device, wherein the indication information comprises cell-specific configuration information or terminal device-specific configuration information; and
generating, by the terminal device, the signal processing pattern based on the indication information.

4. The method according to any one of claims 1 to 3, wherein the signal processing pattern further indicates third time in which the secondary functional module processes the target signal, a time granularity of the third time is one of a frame, a subframe, a slot, and a symbol, and the first time and the third time use different time granularities.

5. The method according to any one of claims 1 to 3, wherein the signal processing pattern further indicates fourth time in which the secondary functional module determines not to process the target signal, a time granularity of the fourth time is one of a frame, a subframe, a slot, and a symbol, and the second time and the fourth time use different time granularities.

6. The method according to any one of claims 1 to 5, wherein the target signal comprises a first synchronization signal, wherein the first synchronization signal is used by the terminal device to perform time synchronization with the network device.

7. The method according to any one of claims 1 to 6, wherein the target signal further comprises a wake-up signal, and the wake-up signal is used to wake up the main functional module to operate.

8. The method according to claim 7, wherein before the terminal device processes the wake-up signal by using the secondary functional module, the method further comprises:
receiving, by the terminal device, a second synchronization signal by using the secondary functional module, wherein the second synchronization signal is used by the terminal device to perform time synchronization with the network device.

9. A data processing method, comprising:
generating, by a network device, indication information; and
sending, by the network device, the indication information to a terminal device, wherein the terminal device comprises a main functional module and a secondary functional module, power consumption of the secondary functional module is lower than that of the main functional module, the indication information indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol.

10. The method according to claim 9, wherein the indication information comprises a signal processing pattern generated by the network device based on cell-specific configuration information or terminal device-specific configuration information.

11. The method according to claim 9, wherein the indication information comprises cell-specific configuration information or terminal device-specific configuration information.

12. The method according to any one of claims 9 to 11, wherein the indication information further indicates third time in which the secondary functional module processes the target signal, a time granularity of the third time is one of a frame, a subframe, a slot, and a symbol, and the first time and the third time use different time granularities.

13. The method according to any one of claims 9 to 11, wherein the indication information further indicates fourth time in which the secondary functional module determines not to process the target signal, a time granularity of the fourth time is one of a frame, a subframe, a slot, and a symbol, and the second time and the fourth time use different time granularities.

14. The method according to any one of claims 9 to 13, wherein the target signal comprises a first synchronization signal, wherein the first synchronization signal is used by the terminal device to perform time synchronization with the network device.

15. The method according to any one of claims 9 to 14, wherein the target signal further comprises a wake-up signal, and the wake-up signal is used to wake up the main functional module to operate.

16. The method according to claim 15, wherein the method further comprises:
sending, by the network device, a second synchronization signal to the terminal device, wherein the second synchronization signal is used by the terminal device to perform time synchronization with the network device.

17. A communication apparatus, comprising:
a main functional module, configured to obtain a signal processing pattern, wherein the signal processing pattern indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol; and
the secondary functional module, configured to process the target signal based on the signal processing pattern.

18. The apparatus according to claim 17, wherein the main functional module is specifically configured to:
receive indication information sent by a network device, wherein the indication information comprises the signal processing pattern.

19. The apparatus according to claim 17, wherein the main functional module is specifically configured to:
receive indication information sent by a network device, wherein the indication information comprises cell-specific configuration information or terminal device-specific configuration information; and
generate the signal processing pattern based on the indication information.

20. The apparatus according to any one of claims 17 to 19, wherein the secondary functional module is further configured to receive a second synchronization signal, wherein the second synchronization signal is used by a terminal device to perform time synchronization with the network device.

21. A communication apparatus, comprising:
a generation unit, configured to generate indication information; and
a sending unit, configured to send the indication information to a terminal device, wherein the terminal device comprises a main functional module and a secondary functional module, the indication information indicates first time in which the secondary functional module processes a target signal, or second time in which the secondary functional module determines not to process the target signal, a time granularity of the first time is one of a frame, a subframe, a slot, and a symbol, and a time granularity of the second time is one of a frame, a subframe, a slot, and a symbol.

22. The apparatus according to claim 21, wherein the indication information comprises a signal processing pattern generated by a network device based on cell-specific configuration information or terminal device-specific configuration information.

23. The apparatus according to claim 21, wherein the indication information comprises cell-specific configuration information or terminal device-specific configuration information.

24. The apparatus according to any one of claims 21 to 23, wherein the sending unit is further configured to send a second synchronization signal to the terminal device, wherein the second synchronization signal is used by the terminal device to perform time synchronization with the network device.

25. A communication apparatus, comprising a main functional module and a secondary functional module, wherein the main functional module and the secondary functional module share a processor and a memory, the memory is configured to store instructions, and the processor is configured to execute the instructions stored in the memory, to implement the method according to any one of claims 1 to 8.

26. A communication apparatus, comprising a processor and a memory, wherein
the memory is configured to store instructions; and
the processor is configured to execute the instructions stored in the memory, to implement the method according to any one of claims 9 to 16.

27. A computer-readable storage medium, wherein the computer-readable storage medium stores instructions, and when the instructions are executed by a computer, the method according to any one of claims 1 to 8 is implemented, or the method according to any one of claims 9 to 16 is implemented.

28. A computer program product, comprising instructions, wherein when the instructions are run on a computer, the computer is enabled to perform the method according to any one of claims 1 to 8, or perform the method according to any one of claims 9 to 16.

29. A chip system, wherein the chip system comprises a processor and a communication interface; and
the communication interface and the processor are interconnected through a line, and the processor is configured to run a computer program or instructions, to implement the method according to any one of claims 1 to 8, or implement the method according to any one of claims 9 to 16.
